# EUROPÄISCHE PATENTSCHRIFT

(11) **EP 2 640 156 B1**
(45) Veröffentlichungstag und Bekanntmachung des Hinweises auf die Patenterteilung: **24.09.2014**
(21) Anmeldenummer: 12001729.8
(22) Anmeldetag: 14.03.2012
(51) Int. Cl.: H04W 80/00

(54) **Funknetzwerk mit geringer Leistungsaufnahme und Verfahren zum Betrieb eines solchen Funknetzwerks**
Wireless network with low power consumption and method for operating such a wireless network
Réseau radio doté d'une réception de puissance moindre et procédé de fonctionnement d'un tel réseau radio

(43) Veröffentlichungstag der Anmeldung: 18.09.2013
(73) Patentinhaber: Landis+Gyr AG, 6301 Zug (CH)
(72) Erfinder: Hohl, Heinz, 6340 Baar (CH)
(74) Vertreter: Schirbach, Marcel

(56) Entgegenhaltungen:
- US-A1- 2006 079 280
- US-A1- 2006 187 961
- US-A1- 2009 073 983

## Beschreibung

Die vorliegende Erfindung fällt in das Gebiet der Netzwerke; sie betrifft ein Funknetzwerk mit geringer Leistungsaufnahme, nämlich ein Low Rate Wireless Personal Area Network (LR-WPAN) und ein Verfahren zum Betrieb eines solchen Funknetzwerks.

### Stand der Technik

Funknetzwerke mit geringer Leistungsaufnahme sind bekannt in Verbindung mit der Norm IEEE 802.15.4, die spezialisiert ist auf so genannten "Low Rate Wireless Personal Area Networks" (Low Rate WPAN). Diese Funknetzwerke arbeiten auf der einen Seite mit kleinen Datenübertragungsraten und weisen auf der anderen Seite den besonderen Vorteil einer langen Batterielebensdauer derjenigen Geräte oder Objekte auf, die mit diesem Funknetzwerk ausgestattet sind; die Batterielebensdauer kann dabei bis zu einigen Jahren reichen, was den Wartungsaufwand entsprechend verringert.

Funknetzwerke gemäss IEEE 802.15.4 umfassen im Wesentlichen eine Bitübertragungseinheit (Physical Layer, PHY) eine Sicherungseinheit (Medium Access Layer, MAC) und eine proprietäre Netzwerkeinheit (Network Layer). Solche Netzwerkeinheiten sind beispielsweise bekannt unter den Bezeichnungen 6loWPAN, ZigBee, WirelessHART oder MiWi, wobei diese Liste genannter Netzwerkeinheiten nicht abschliessend ist.

Allen Netzwerkeinheiten ist gemeinsam, dass sie Übertragungsreichweiten von einigen 10 Metern innerhalb von Gebäuden aufweisen, wobei sich die Reichweite durch armierte Betonwände, Interferenzen, Störungen oder durch Geräteinstallationen in metallischen Schaltschränken verringern kann. Solche Probleme werden in der Regel durch zusätzliche Installationen von Routern oder Netzwerkkoordinatoren behoben, womit zwar die Anzahl Netzwerksprünge (Hops) untereinander kommunizierender Objekte vergrössert wird, aber auf der anderen Seite eine Kommunikation überhaupt erst ermöglicht werden kann.

Tatsache ist, dass sich solche zusätzlichen Installationen von Routern oder Netzwerkkoordinatoren in Gebäuden mit zahlreichen Stockwerken oder in sehr grossen Gebäuden als aufwendig darstellen, nicht nur in Bezug auf die verbaute, mit Kosten verbundene Hardware, sondern zudem in den zahlreichen -und damit zeitintensiven-Netzwerksprüngen zwischen kommunizierenden Geräten.

Anwender der hier in Rede stehenden Funknetzwerke mit niedriger Leistungsaufnahme beugen sich derzeit dem erhöhten Installationsaufwand, um die ansonsten geschätzten Vorteile solcher Funknetzwerke nutzen zu können.

So ist beispielsweise in "ZigBee-to-Internet Interconnection Architectures", SYSTEMS, 2007, ICONS '07, SECOND INTERNATIONAL CONFERENCE ON, IEEE, PI, 1. April 2007 (2007-04-01), ISBN: 978-0-7695-2807-6, von MIROSLAV SVEDA ET AL, beschrieben, wie die "Reichweite" eines ZigBee-Neztwerks, dass grundsätzlich auf Funkverbindungen basiert, durch eine TCP/IP-Brücke drahtgebunden erweitert werden kann. Eine solche TCP/IP-Brücke ermöglicht zwar dann die Kommunikation zwischen Objekten im ZigBee-Netzwerk, die untereinander selbst keine Funkverbindung mehr haben; auf der anderen Seite wird dieser Vorteil mit entsprechend -gegenüber der bekannten ZigBEE-Hardware- vergleichsweise grossem Hardware-Aufwand erkauft. Auch in der Publikation "Wireless Sensor Network and Sensor Fusion Technology for Ubiquitous Smart Living Space Applications (Invited Paper)", UNIVERSAL COMMUNICATION, 2008, ISUC '08, SECOND INTERNATIONAL SYMPOSIUM ON, IEEE, PISCATAWAY, NJ, USA, 15. Dezember 2008 (2008-12-15), ISBN: 978-0-7695-3433-6, von MING-WHEI FENG ET AL wird eine ganz ähnlicher Systemsprung zwischen einem ZigBee-Funknetzwerk und einer TCP/IP-Brücke beleuchtet.

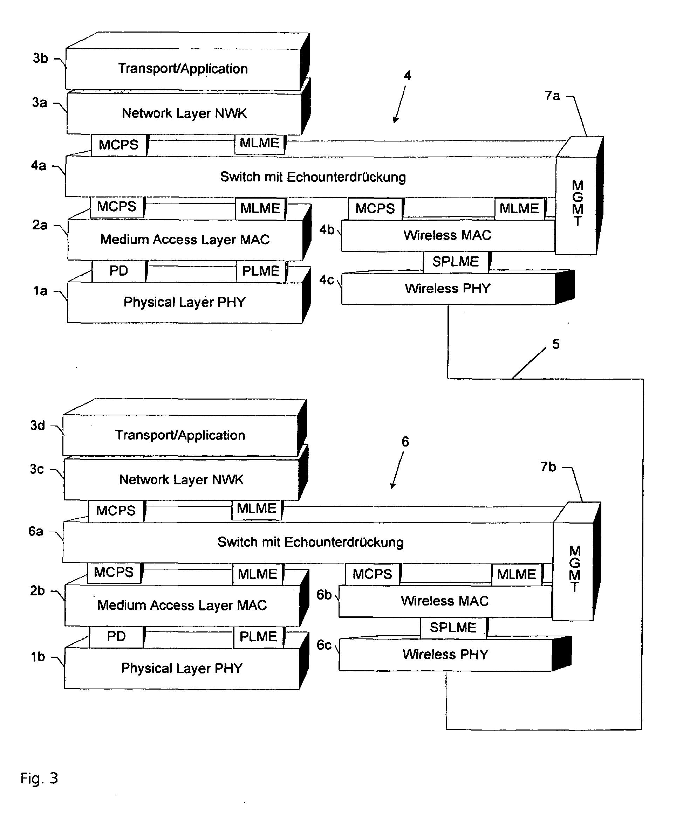

Dokument US 2009/073983 A1 offenbart ein Verfahren zum Betrieb eines Funknetzwerks mit geringer Leistungsaufnahme (Par. 44 bis 46, und Fig. 3: 802.15.4 MAC/PHY von 6LoWPAN von Gateway Apparat 32 und 6LoWPAN node 34, wobei 6LoWPAN ein Funknetzwerks mit geringer Leistungsaufnahme repräsentiert), wobei eine erste Bitübertragungseinheit (Par. 44 bis 45 und Fig. 3: PHY layer der Gateway 32; eine erste Bitübertragungseinheit ist implizites Merkmal hiervon) und eine daran angeschlossenen erste Sicherungseinheit (Par. 44 bis 45 und Fig. 3: 802.15.4 MAC layer der Gateway 32; eine erste Bitübertragungseinheit ist ein implizites Merkmal hiervon) mit einer ersten Netzwerkeinheit (Par. 44 und Fig. 3: Network Layer (IP) der Gateway 32) verbunden ist. Das Verfahren gemäss US 2009/073983 A1 ist dadurch gekennzeichnet, dass eine erste Netzwerkeinheit mittels einer ersten Netzwerkverbindung (Fig. 3: Gateway-interne Verbindung zwischen Network Layer (IP) und TCP/UPD for 6LoWPAN (33a) und Socket Adaptation Layer (33b) der 6LoWPAN Middleware 33) über eine nachgeschaltete Verbindungsstruktur (Fig. 3: Netzwerkverbindung zwischen Socket Adaption Layer (33B) der 6LoWPAN Middleware via 802.15.4 MAC/PHYhin zu 6LoWPAN Middleware von User Node 34) mit einer zweiten Netzwerkverbindung (Fig. 3: 6LoWPAN Middleware von User Node 34) kommuniziert und somit eine zweite Netzwerkeinheit (Fig. 3: Fig. 3: 6LoWPAN Middleware von User Node 34)mit der ersten Netzwerkeinheit (Fig. 3: Network Layer (IP) von Gateway 32) verbunden wird.

### Darstellung der Erfindung

Es ist deshalb Aufgabe der vorliegenden Erfindung, ein Funknetzwerk mit geringer Leistungsaufnahme, ein sogenanntes Low Rate Wireless Personal Area Network (LR-WPAN), dahingehend weiterzubilden, so dass die oben beschriebene, begrenzte Übertragungsreichweite innerhalb eines ZigBee-Netzwerks auf einfache Weise erweitert werden kann und dabei die zahlreiche Zusatzinstallation von Routern oder Netzwerkkoordinatoren sich entsprechend erübrigt; es ist ferner Aufgabe der vorliegenden Erfindung ein Verfahren zum Betrieb eines solchen Funknetzwerks dahingehend weiterzubilden, dass eine Kommunikation zwischen Geräten mit möglichst wenigen Netzwerksprüngen erfolgen kann.

Die der Erfindung für das Funknetzwerk mit geringer Leistungsaufnahme zugrunde liegende Aufgabe wird gelöst durch die Merkmale des Anspruchs 1; die diesen Erfindungsgedanken weiterbildenden Merkmale sind Gegenstand der Unteransprüche 2 bis 8.

Der Kern der Erfindung hinsichtlich des Funknetzwerks mit geringer Leistungsaufnahme ist, dass eine erste Bitübertragungseinheit (Phyiscal Layer) und eine daran angeschlossenen erste Sicherungseinheit (Medium Access Layer) mit einer ersten Netzwerkeinheit in Wirkverbindung stehen, wobei auf Basis eines Low Rate Wireless Personal Area Networks zwischen der ersten Sicherungseinheit und der ersten Netzwerkeinheit eine erste Netzwerkverbindung über eine nachgeschaltete Verbindungsstruktur mit einer zweiten Netzwerkverbindung verbunden ist, um eine zweite Netzwerkeinheit mit der ersten Netzwerkeinheit zwecks Kommunikation auf Basis eines Low Rate Wireless Personal Area Networks zu verbinden; mittels der erfindungsgemässen Verbindungsstruktur und der Netzwerkverbindung werden also zwei Netzwerkeinheiten, die ansonsten nicht in Funkreichweite zueinander stehend, auf einfache Weise unmittelbar verbunden und bilden somit eine erweiterte Netzwerkstruktur, wobei sich alle Funktionen in dieser erweiterten Netzwerkstruktur gleich verhalten, wie in einem reinen Netzwerk mit vollständiger Funkabdeckung.

Mit Vorteil lassen sich nun Objekte innerhalb eines Low Rate Wireless Personal Area Networks (LR-WPAN) ohne gemeinsame Funkverbindung mittels der Verbindungsstruktur und den Netzwerkverbindungen auf Basis des Low Rate Wireless Personal Area Networks verbinden, ohne dass auf eine Vielzahl von herkömmlichen Routern oder Netzwerkkoordinatoren zurückgegriffen werden muss; die Verbindung über die Verbindungsstruktur ist dabei quasi unabhängig von deren Länge und ein Datentransfer über die Verbindungsstruktur benötigt dabei lediglich etwa die gleiche Zeit, wie zwei Netzwerksprünge (Hops) zwischen Objekten mit Funkverbindung.

Die Verbindungsstruktur kann mit Vorteil bidirektional als Drahtverbindung, als Funkverbindung oder als eine Lichtleiterverbindung ausgebildet sein, wobei eine Lichtleiterverbindung -und hierunter insbesondere eine Kunststofflichtleiterverbindungvon grösstem Vorteil ist. Kunststofflichtleiterverbindungen (Plastic Optical Fiber, POF) sind nämlich preiswert und mit einfachen Mitteln installierbar; zudem sind gemäss üblichen Installationsvorschriften für Elektroanlagen, Lichtleiterverbindungen unmittelbar neben elektrischen Stromleitungen installierbar, da zwischen ihnen keine elektrischen Fehler oder Störungen auftreten können.

Für Hausinstallationen hat sich bei den Netzwerkeinheiten der so genannte ZigBee-Standard (IEEE 802.15.4) etabliert, womit in einem Keller installierte Energiezähler beispielsweise mit Anzeigegeräten oder Verbrauchsgeräten in jeder einzelnen Wohnung eines Gebäudes kommunizieren können.

Die der Erfindung für das Verfahren zum Betrieb eines Funknetzwerks mit geringer Leistungsaufnahme zugrunde liegende Aufgabe wird gelöst durch die Merkmale des Anspruchs 9; die diesen Erfindungsgedanken weiterbildenden Merkmale sind Gegenstand des Unteranspruchs 10.

Der Kern der Erfindung hinsichtlich des Verfahrens zum Betrieb eines Funknetzwerks mit geringer Leistungsaufnahme ist, dass eine erste Bitübertragungseinheit und eine daran angeschlossenen erste Sicherungseinheit mit einer ersten Netzwerkeinheit verbunden ist und zwischen dieser ersten Sicherungseinheit und der ersten Netzwerkeinheit eine erste Netzwerkverbindung über eine nachgeschaltete Verbindungsstruktur mit einer zweiten Netzwerkverbindung kommuniziert, womit eine zweite Netzwerkeinheit mit der ersten Netzwerkeinheit zwecks Kommunikation auf Basis eines Low Rate Wireless Personal Area Networks verbunden wird.

Mit Vorteil weisen die erste und die zweite Netzwerkverbindung eine erste bzw. zweite Managementeinheit auf, die zum Koppeln der Netzwerkeinheiten Adressdaten auf Basis des Low Rate Wireless Personal Area Networks austauschen.

### Kurze Beschreibung der Zeichnungen

Im Folgenden wird die Erfindung anhand von Figuren beispielhaft erläutert. Gleiche Gegenstände sind in den Figuren grundsätzlich mit gleichen Bezugszeichen bezeichnet. An dieser Stelle wird darauf hingewiesen, dass die Figuren Standard-Schnittstellen-Verbindungen zwischen einzelnen Einheiten aufweisen, die auf dem Standard IEEE 802.15.4 beruhen und im Folgenden ohne weitere Erörterung als bekannt vorausgesetzt werden. Es zeigen rein schematisch die
- Fig. 1: anhand eines Blockdiagramms die wesentlichen Funktionseinheiten eines erfindungsgemässen Funknetzwerks auf Basis eines Low Rate Wireless Personal Area Networks mit einem Lichtleiter (Optical Fiber) als Verbindungsstruktur zwischen zwei Netzwerkeinheiten (Network Layer);
- Fig. 2: eine Ausführungsvariante des erfindungsgemässen Funknetzwerks mit einer drahtgebundenen Verbindungsstruktur (LINE);
- Fig. 3: eine weitere Ausführungsvariante des erfindungsgemässen Funknetzwerks mit einer auf Funktechnologie basierenden Verbindungsstruktur (WIRELESS);
- Fig. 4: eine weitere Ausführungsvariante des erfindungsgemässen Funknetzwerks mit Netzwerkeinheiten basierend auf dem ZigBee-Standard gemäss IEEE 802.15.4 mit einer Kunststofflichtleiterverbindung als Verbindungsstruktur, und
- Fig. 5: eine schematische Darstellung einer Hausinstallation des erfindungsgemässen Funknetzwerks.

### Wege zur Ausführung der Erfindung

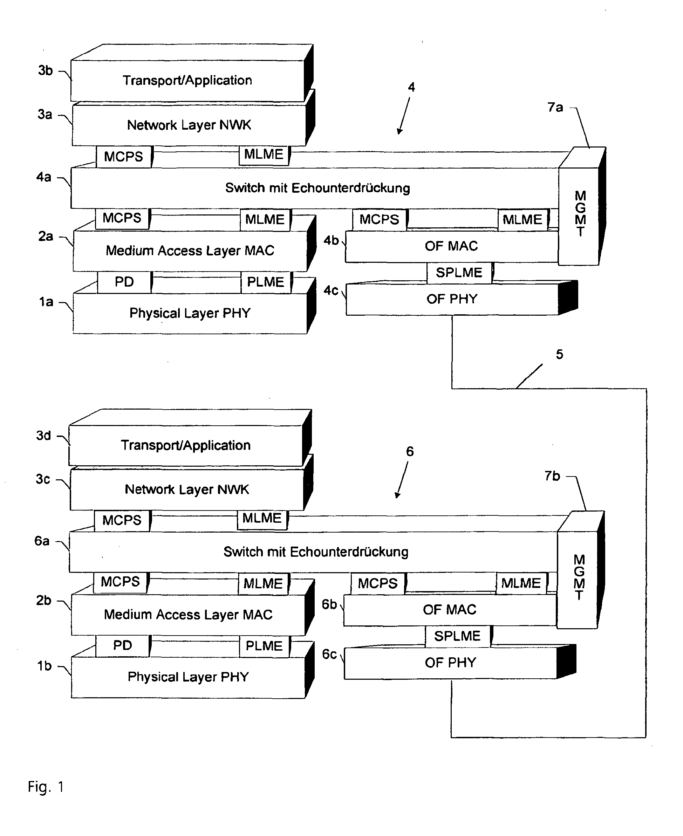

Fig. 1 zeigt anhand eines Blockdiagramms das erfindungsgemässe Funknetzwerk mit geringer Leistungsaufnahme (Low Rate Wireless Personal Area Network), wobei entsprechend dem Standard IEEE 802.15.4 für solche Netzwerke eine erste Bitübertragungseinheit 1a (Physical Layer, PHY), eine erste Sicherungseinheit 2a (Medium Access Layer, MAC) und eine erste Netzwerkeinheit 3a (Network Layer) in Wirkverbindung zueinander stehen. Mit "Netzwerkeinheit" ist an dieser Stelle jede mögliche Ausführungsform solcher Einheiten umfasst, wobei -nicht abschliessendlediglich die Standards gemäss 6loWPAN, ZigBee, WirelessHART oder MiWi namentlich erwähnt werden.

Die erste Bitübertragungseinheit 1 a, die erste Sicherungseinheit 2a und die Netzwerkeinheit 3a sind über die bekannten Schnittstellen PD-SAP, PLME-SAP, MCPS-SAP und MLME-SAP miteinander verbunden, welche hier nicht näher erläutert werden.

Erfindungsgemäss ist zwischen der ersten Sicherungseinheit 2a und der ersten Netzwerkeinheit 3a eine erste Netzwerkverbindung 4 installiert, die einen ersten Switch mit Echounterdrückung 4a, eine zweite Sicherungseinheit 4b (OF MAC) und eine zweite Bitübertragungseinheit 4c (OF PHY) umfasst. Die hier gezeigte, zweite Bitübertragungseinheit 4c ist für die Kommunikation auf Basis eines Low Rate Wireless Personal Area Networks über einen Lichtleiter (Optical Fiber, OF) ausgelegt. Neben den bekannten Schnittstellen MCPS-SAP und MLME-SAP sind der erste Switch mit Echounterdrückung 4a und die zweite Sicherungseinheit 4b über eine erste Managementeinheit 7a miteinander verbunden. Ferner verbindet die bekannte Schnittstelle SPLME-SAP die zweite Sicherungseinheit 4b mit der zweiten Bitübertragungseinheit 4c.

Des Weiteren zeigt Fig. 1 eine vierte Bitübertragungseinheit 1 b (Physical Layer, PHY), eine vierte Sicherungseinheit 2b (Medium Access Layer, MAC) die mit einer zweiten Netzwerkeinheit 3c (Network Layer) in Wirkverbindung stehen. Auch hier sind die vierte Bitübertragungseinheit 1 b, die vierte Sicherungseinheit 2b und die zweite Netzwerkeinheit 3c über die bekannten Schnittstellen PD-SAP, PLME-SAP, MCPS-SAP und MLME-SAP miteinander verbunden.

Erfindungsgemäss ist auch hier zwischen der vierten Sicherungseinheit 2b und der zweiten Netzwerkeinheit 3b eine zweite Netzwerkverbindung 6 installiert, die einen zweiten Switch mit Echounterdrückung 6a, eine dritte Sicherungseinheit 6b (OF MAC) und eine dritte Bitübertragungseinheit 6c (OF PHY) umfasst. Die hier gezeigte, dritte Bitübertragungseinheit 6c ist für die Kommunikation auf Basis eines Low Rate Wireless Personal Area Networks über einen Lichtleiter (Optical Fiber, OF) ausgelegt. Neben den bekannten Schnittstellen MCPS-SAP und MLME-SAP sind der zweite Switch mit Echounterdrückung 6a und die dritte Sicherungseinheit 6b über eine zweite Managementeinheit 7b miteinander verbunden. Ferner verbindet die bekannte Schnittstelle SPLME-SAP die dritte Sicherungseinheit 6b mit der dritten Bitübertragungseinheit 6c.

Haben beispielsweise die erste und die zweite Netzwerkeinheit 3a, c auf der Funkseite keine gemeinsame Abdeckung, sind sie nun mittels eines Lichtleiters als Verbindungsstruktur 5 auf Basis eines Low Rate Wireless Personal Area Networks miteinander verbunden. Zum Koppeln der beiden Netzwerkeinheiten 3a, c tauschen die erste Managementeinheit 7a und die zweite Managementeinheit 7b initial Adressdaten aus, damit eine Kommunikation bereitgestellt werden kann.

Durch Veränderungen im Umfeld des Funknetzwerks (Wegfall von Störungen, Interferenz, usw.) kann es vorkommen, dass beispielsweise die erste und die zweite Netzwerkeinheit 3a, c auf der Funkseite zu unbestimmten Zeiten eine gemeinsame Abdeckung haben. Sind diese jedoch bereits über die Verbindungsstruktur 5 miteinander verbunden, kann es zu Mehrfachempfang von Datenpaketen kommen, nämlich dann, wenn ein Datenpaket von einer Netzwerkeinheit (3a oder 3c) an alle im Funknetzwerk vorhandenen Geräte und Objekte gesendet werden soll (Broadcast-Daten) und daher über Funk, wie auch über die Verbindungsstruktur 5 gesendet wird. In diesem Fall würde die Netzwerkeinheit (3a oder 3c) das erwähnte Datenpaket zweimal erhalten. Dieser Mehrfachempfang von Datenpaketen kommt in einem nur funkbasierten Netzwerk (normales ZigBee-Netzwerk) nicht vor und kann in der Netzwerkeinheit (3a oder 3c), wie auch in übergeordneten Einheiten (3d oder 3b) zu Problemen und somit zum Abbruch der Kommunikation führen. Um dies zu vermeiden wird im Switch mit Echounterdrückung (4a, 6a) ein Filter eingefügt, welches solche mehrfach empfangenen Pakete erkennt und ausfiltert, sodass die Netzwerkeinheit (3c oder 3a) das Datenpaket nur einmal erhält.

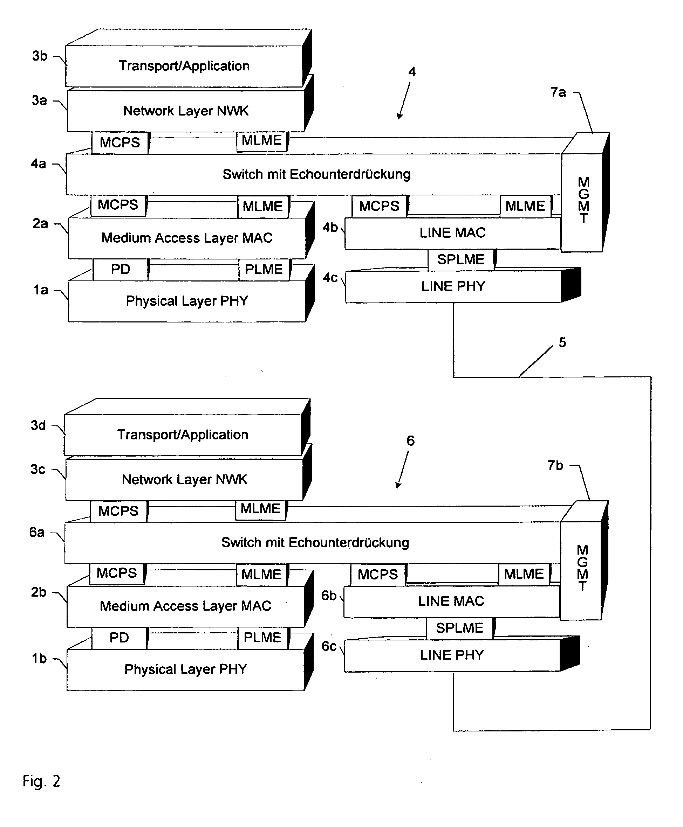

Eine weitere erfindungsgemässe Ausführungsform des Funknetzwerks in Fig. 2 unterscheidet sich gegenüber der Ausführungsform in Fig. 1 lediglich durch die Wahl der Verbindungsstruktur 5, die hier als drahtgebundene Verbindung ausgeführt ist. Entsprechend sind die zweiten und dritten Sicherungseinheiten 4b, 6b (LINE MAC) bzw. die zweiten und dritten Bitübertragungseinheiten 4c, 6c (LINE PHY) für die drahtgebundene Kommunikation auf Basis eines Low Rate Wireless Personal Area Networks über die Verbindungsstruktur 5 ausgelegt.

Eine weitere erfindungsgemässe Ausführungsform des Funknetzwerks zeigt Fig. 3, die sich gegenüber den vorhergehenden Ausführungsformen lediglich durch die Wahl der Verbindungsstruktur 5, die hier als Funkverbindung auf Basis eines Low Rate Wireless Personal Area Networks ausgeführt ist, unterscheidet. Konsequenterweise sind die zweiten und dritten Sicherungseinheiten 4b, 6b (WIRELESS MAC) bzw. die zweiten und dritten Bitübertragungseinheiten 4c, 6c (WIRELESS PHY) für die Kommunikation per Funk über die Verbindungsstruktur 5 ausgelegt.

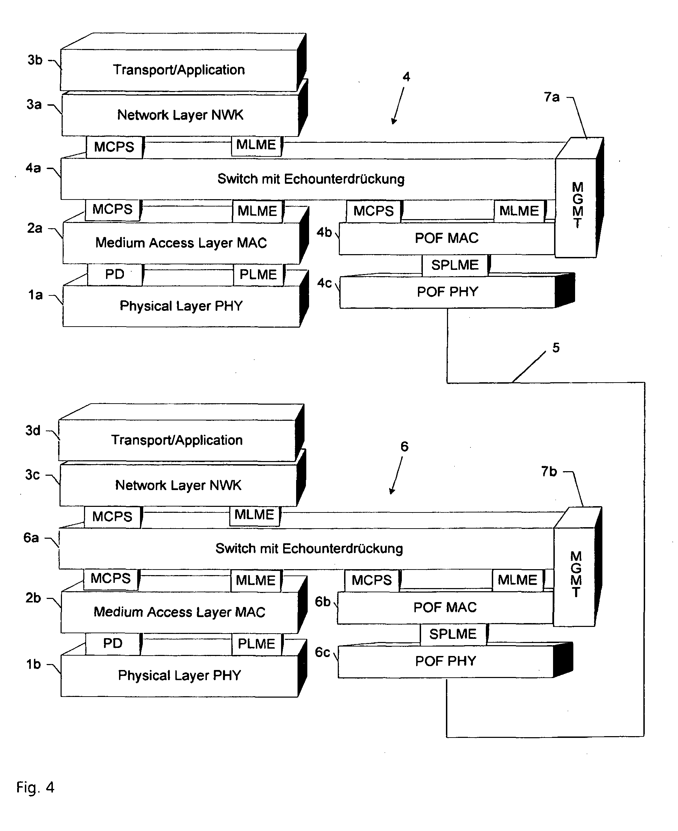

Hinsichtlich der Verbindungsstruktur 5 zeigt die Fig. 4 eine weitere Ausführungsform des erfindungsgemässen Funknetzwerks. Die Verbindungsstruktur 5 ist hier als Kunststofflichtleiter (Plastic Optical Fiber, POF) ausgeführt, womit die zweiten und dritten Sicherungseinheiten 4b, 6b (POF MAC) bzw. die zweiten und dritten Bitübertragungseinheiten 4c, 6c (POF PHY) für die Kommunikation auf Basis eines Low Rate Wireless Personal Area Networks über Kunststofflichtleiter als Verbindungsstruktur 5 ausgelegt sind.

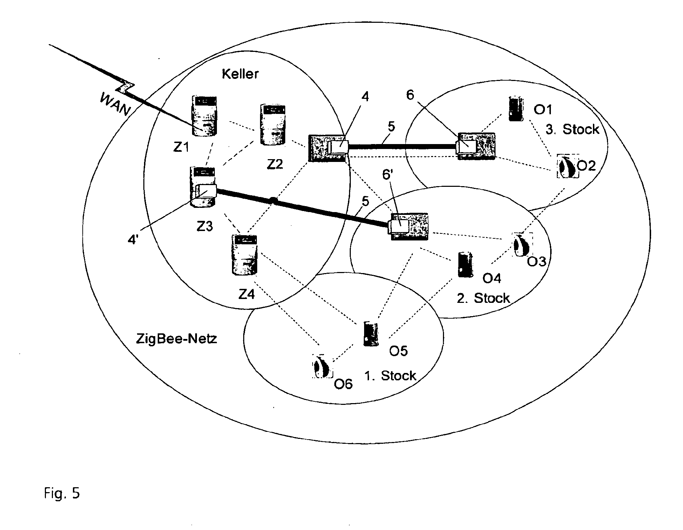

In Fig. 5 ist eine Hausinstallation des erfindungsgemässen Funknetzwerks gezeigt, bei der Verbraucher 02, 03, 06 und Anzeigeeinheiten 01, 04, 05 mit Energiezählern Z1, Z2, Z3, Z4, die in einem Keller installiert sind, miteinander kommunizieren. Um die Kommunikationspfade unterscheiden zu können, sind zwei Strichstärken der Verbindungslinien gewählt worden; die dünnen Verbindungslinien stellen eine Funkkommunikation auf Basis eines Low Rate Wireless Personal Area Networks, beispielsweise gemäss ZigBee, dar und die dicken Verbindungslinien stellen eine Kommunikation ebenfalls auf Basis eines Low Rate Wireless Personal Area Networks dar, aber über die Verbindungsstruktur 5 gemäss der Erfindung. Wie einfach zu erkennen ist, hat beispielsweise die Anzeigeeinheit 01 im 5. Stock keine unmittelbare Funkverbindung mit einem Zähler im Keller; hingegen weist diese Anzeigeeinheit 01 eine mittelbare Verbindung über die Netzwerkverbindung 6, die Verbindungsstruktur 5 und die Netzwerkverbindung 4 auf; somit ist die Anzeigeeinheit O1 auch mit den Zählern Z1 - Z4 verbunden. Dieselbe Verbindung weist ebenfalls der Verbraucher 02 im 5. Stock mit den Energiezählern Z1 - Z4 im Keller auf; des Weiteren kann der Verbraucher 02 auch über eine ZigBee-Funkkommunikation und eine weitere Netzwerkverbindung 6' direkt mit dem Zähler Z3 über eine Verbindungsstruktur 5 kommunizieren, wobei dieser Zähler Z3 ebenfalls mit einer Netzwerkverbindung 4' ausgestattet ist.

## Patentansprüche

1. Funknetzwerk mit geringer Leistungsaufnahme, nämlich ein so genanntes Low Rate Wireless Personal Area Network (LR-WPAN), umfassend eine erste Bitübertragungseinheit (1a, Phyiscal Layer) und eine daran angeschlossenen erste Sicherungseinheit (2a, Medium Access Layer), wobei auf dieser ersten Sicherungseinheit (2a) eine erste Netzwerkeinheit (3a) angeordnet ist, **dadurch gekennzeichnet, dass** zwischen der ersten Sicherungseinheit (2a) und der ersten Netzwerkeinheit (3a) eine erste Netzwerkverbindung (4) mit einem ersten Switch mit Echounterdrückung (4a) auf Basis des Low Rate Wireless Personal Area Networks über eine nachgeschaltete Verbindungsstruktur (5) mit einer zweiten Netzwerkverbindung (6) und einem zweiten Switch mit Echounterdrückung (6a) auf Basis des Low Rate Wireless Personal Area Networks verbunden ist, wobei diese Verbindungsstruktur (5) eine zweite Netzwerkeinheit (3c) mit der ersten Netzwerkeinheit (3a) zwecks Kommunikation auf Basis des Low Rate Wireless Personal Area Networks verbindet.

2. Funknetzwerk gemäss Anspruch 1, **dadurch gekennzeichnet, dass** die Verbindungsstruktur (5) mit der ersten und zweiten Netzwerkverbindung (4, 6) im Verhältnis zu der Funkübertragungsreichweite zwischen den Netzwerkeinheiten (3a, c) eine Fernverbindung zwischen diesen beiden Netzwerkeinheiten (3a, c) auf Basis des Low Rate Wireless Personal Area Networks darstellt, wobei diese Fernverbindung die maximale Funkübertragungsreichweite übertrifft.

3. Funknetzwerk nach einem der vorhergehenden Ansprüche, **dadurch gekennzeichnet, dass** die erste Netzwerkverbindung (4) neben dem ersten Switch mit Echounterdrückung (4a), eine nachgeschaltete, zweite Sicherungseinheit (4b) verbunden mit einer zweiten Bitübertragungseinheit (4c) umfasst.

4. Funknetzwerk nach Anspruch 3, **dadurch gekennzeichnet, dass** die zweite Netzwerkverbindung (6) neben dem zweiten Switch mit Echounterdrückung (6a), eine nachgeschaltete, dritte Sicherungseinheit (6b) verbunden mit einer dritten Bitübertragungseinheit (6c) umfasst.

5. Funknetzwerk nach Anspruch 4, **dadurch gekennzeichnet, dass** die Verbindungsstruktur (5) zwischen der zweiten Bitübertragungseinheit (4c) und der dritten Bitübertragungseinheit (6c) der ersten bzw. der zweiten Netzwerkverbindung (4, 6) angeordnet ist.

6. Funknetzwerk nach Anspruch 5, **dadurch gekennzeichnet, dass** zwischen dem ersten Switch mit Echounterdrückung (4a) und der zweiten Sicherungseinheit (4b) eine erste Managementeinheit (7a) und zwischen dem zweiten Switch mit Echounterdrückung (4b) und der dritten Sicherungseinheit (6b) eine zweite Managementeinheit (7b) angeordnet ist, zwecks eines initialen Adressdatenaustauschs zum Koppeln der beiden Netzwerkverbindungen (3a, c).

7. Funknetzwerk nach einem der vorhergehenden Ansprüche, **dadurch gekennzeichnet, dass** die Verbindungsstruktur (5) bidirektional als eine Drahtverbindung und/oder eine Funkverbindung und/oder eine Lichtleiterverbindung, insbesondere als eine Kunststofflichtleiterverbindung, ausgebildet ist.

8. Funknetzwerk nach einem der vorhergehenden Ansprüche, **dadurch gekennzeichnet, dass** die Netzwerkeinheiten (3a, c) gemäss dem ZigBee-Standard (IEEE 802.15.4) ausgebildet sind.

9. Verfahren zum Betrieb eines Funknetzwerks mit geringer Leistungsaufnahme, wobei eine erste Bitübertragungseinheit (1a, Phyiscal Layer) und eine daran angeschlossenen erste Sicherungseinheit (2a, Medium Access Layer) mit einer ersten Netzwerkeinheit (3a) verbunden ist, **dadurch gekennzeichnet, dass** zwischen der ersten Sicherungseinheit (2a) und der ersten Netzwerkeinheit (3a) eine erste Netzwerkverbindung (4) über eine nachgeschaltete Verbindungsstruktur (5) mit einer zweiten Netzwerkverbindung (6) kommuniziert und somit eine zweite Netzwerkeinheit (3c) mit der ersten Netzwerkeinheit (3a) verbunden wird.

10. Verfahren nach Anspruch 9, **dadurch gekennzeichnet, dass** die erste und die zweite Netzwerkverbindung (4, 6) eine erste bzw. zweite Managementeinheit (7a, b) aufweisen, wobei diese Managementeinheiten (7a, b) Adressdaten zum Koppeln der Netzwerkeinheiten (3a, c) austauschen.

## Claims

1. A radio network having a low power consumption, namely a so-called Low Rate Wireless Personal Area Network (LR-WPAN), comprising a first physical transmission unit (1a, Physical Layer) and a first data link unit connected thereto (2a, Medium Access Layer), a first network unit (3a) being arranged on this first data link unit (2a), **characterized in that** between the first data link unit (2a) and the first network unit (3a), a first network link (4) having a first switch comprising echo suppression (4a) is connected on the basis of the Low Rate Wireless Personal Area Network via a subsequent connection structure (5) to a second network link (6) and a second switch having echo suppression (6a) based on the Low Rate Wireless Personal Area Network, this connection structure (5) connecting a second network unit (3c) to the first network unit (3a) for the purpose of communication based on the Low Rate Wireless Personal Area Network.

2. The radio network as claimed in claim 1, **characterized in that** the connection structure (5) comprising the first and the second network link (4, 6) represents, in relation to the radio transmission range between the network units (3a, c), a remote connection between these two network units (3a, c) based on the Low Rate Wireless Personal Area Network, this remote connection exceeding the maximum radio transmission range.

3. The radio network as claimed in one of the preceding claims, **characterized in that** the first network link (4), apart from the first switch having echo suppression (4a), comprises a subsequent second data link unit (4b) connected to a second physical transmission unit (4c).

4. The radio network as claimed in claim 3, **characterized in that** the second network link (6), apart from the second switch having echo suppression (6a), comprises a subsequent third data link unit (6b) connected to a third physical transmission unit (6c).

5. The radio network as claimed in claim 4, **characterized in that** the connection structure (5) is arranged between the second physical transmission unit (4c) and the third physical transmission unit (6c) of the first and the second network link (4, 6), respectively.

6. The radio network as claimed in claim 5, **characterized in that**, between the first switch having echo suppression (4a) and the second data link unit (4b), a first management unit (7a) and, between the second switch having echo suppression (4b) and the third data link unit (6b), a second management unit (7b) are arranged for the purpose of an initial address data exchange for coupling the two network links (3a, c).

7. The radio network as claimed in one of the preceding claims, **characterized in that** the connection structure (5) is designed bidirectionally as a wire link and/or a radio link and/or an optical fiber link, especially as a plastic optical fiber.

8. The radio network as claimed in one of the preceding claims, **characterized in that** the network units (3a, c) are designed in accordance with the ZigBee Standard (IEEE 802.15.4).

9. A method for operating a radio network having a low power consumption, a first physical transmission unit (1a, Physical Layer) and a first data link unit connected thereto (2a, Medium Access Layer) being connected to a first network unit (3a), **characterized in that** between the first data link unit (2a) and the first network unit (3a), a first network link (4) communicates with a second network link (6) via a subsequent connection structure (5) and thus a second network unit (3c) is connected to the first network unit (3a).

10. The method as claimed in claim 9, **characterized in that** the first and the second network link (4, 6) have a first and a second management unit (7a, b), respectively, these management units (7a, b) exchanging address data for coupling the network units (3a, c).

## Revendications

1. Réseau de radiocommunications de faible consommation, en l'occurrence un Rate Wireless Personal Area Network (LR-WPAN), comprenant une première unité de transmission de bits (1a, couche physique) et, connectée à celle-ci, une première unité de sécurité (2a, couche d'accès moyenne), dans lequel une première unité de réseau (3a) est disposée sur ladite première unité de sécurité (2a), **caractérisé en ce qu'**entre la première unité de sécurité (2a) et la première unité de réseau (3a), une première connexion réseau (4) est connectée au moyen d'un premier switch avec suppression d'écho (4a) sur la base du réseau Low Rate Wireless Personal Area par le biais d'une structure de connexion en aval (5) avec une deuxième connexion réseau (6) et un deuxième switch avec suppression d'écho (6a) sur la base du réseau Low Rate Wireless Personal Area, dans lequel ladite structure de connexion (5) relie une seconde unité de réseau (3c) avec la première unité de réseau (3a) à des fins de communication sur la base du réseau Low Rate Wireless Personal Area.

2. Réseau de radiocommunications selon la Revendication 1, **caractérisé en ce que** la structure de connexion (5) avec la première et la seconde connexion de réseau (4, 6) représente, par rapport à la portée de la transmission radio entre les unités de réseau (3a, c), une connexion à distance entre ces deux unités de réseau (3a, c) sur la base du réseau Low Rate Wireless Personal Area, dans lequel ladite connexion à distance excède la portée maximale de la transmission radio.

3. Réseau de radiocommunications selon l'une des Revendications précédentes **caractérisé en ce que** la première connexion réseau (4) à côté du premier switch avec suppression d'écho (4a) comprend une seconde unité de sécurité (4b) connectée en aval reliée à une seconde unité de transmission de bits (4c).

4. Réseau de radiocommunications selon la Revendication 3, **caractérisé en ce que** la seconde connexion réseau (6) à côté du second switch avec suppression d'écho (6a) comprend une troisième unité de sécurité (6b) connectée en aval reliée à une troisième unité de transmission de bits (6c).

5. Réseau de radiocommunications selon la Revendication 4, **caractérisé en ce que** la structure de connexion (5) est disposée entre la seconde unité de transmission de bits (4c) et la troisième unité de transmission de bits (6c) de la première ou de la seconde connexion réseau (4, 6).

6. Réseau de radiocommunications selon la Revendication 5, **caractérisé en ce qu'**une première unité de gestion (7a) est disposée entre le premier switch avec suppression d'écho (4a) et la seconde unité de sécurité (4b) et qu'une deuxième unité de gestion (7b) est disposée entre le deuxième switch avec suppression d'écho (4b) et la troisième unité de sécurité (6b), aux fins d'un échange de données d'adresse initial visant le couplage des deux unités de réseau (3a, c).

7. Réseau de radiocommunications selon l'une des Revendications précédentes, **caractérisé en ce que** la structure de connexion (5) est bidirectionnelle et présente la forme d'une liaison filaire et/ou d'une liaison radio et/ou d'une liaison optique, en particulier une liaison optique plastique.

8. Réseau de radiocommunications selon l'une des Revendications précédentes, **caractérisé en ce que** les unités de réseau (3a, c) sont formées conformément à la norme ZigBee (IEEE 802.15.4).

9. Procédé pour l'opération d'un réseau de radiocommunications de faible consommation dans lequel une première unité de transmission de bits (1a, couche physique), et une première unité de sécurité (2a, couche d'accès moyenne) connectée à celle-ci, est connectée à une première unité de réseau (3a), **caractérisé en ce qu'**entre la première unité de sécurité (2a) et la première unité de réseau (3a), une première connexion réseau (4) communique avec une seconde connexion réseau (6) via une structure de connexion (5) et que de cette manière une seconde unité de réseau (3c) est connectée à la première unité de réseau (3a).

10. Procédé selon la Revendication 9, **caractérisé en ce que** la première et la seconde connexion réseau (4, 6) présentent une première ou une seconde unité de gestion (7a, b), dans lequel lesdites unités de gestion (7a, b) échangent des données d'adresse visant le couplage des unités de réseau (3a, c).
